# EUROPEAN PATENT SPECIFICATION

(11) **EP 3 371 280 B1**
(45) Date of publication and mention of the grant of the patent: **12.02.2020**
(21) Application number: 16790958.9
(22) Date of filing: 31.10.2016
(51) Int. Cl.: C10L 1/06, C10L 1/02, B60W 10/06

(54) **FUEL COMPOSITION**
KRAFTSTOFFZUSAMMENSETZUNG
COMPOSITION DE CARBURANT

(30) Priority: 02.11.2015 EP 15192643
(43) Date of publication of application: 12.09.2018
(73) Proprietor: Shell Internationale Research Maatschappij B.V., 2596 HR The Hague (NL)
(72) Inventor: ORLEBAR, Caroline, Nicola, London E14 5NR (GB)
(74) Representative: Shell Legal Services IP
(86) International application number: PCT/EP2016/076243
(87) International publication number: WO 2017/076811

(56) References cited:
- WO-A1-2016/055461
- US-A1- 2003 183 554
- US-A1- 2006 254 126
- US-A1- 2009 229 175
- US-A1- 2012 151 824

## Description

### Field of the Invention

The invention is in the field of fuel formulations, particularly gasoline-type fuel formulations.

### Background of the Invention

The rising costs of hydrocarbon-based fuels and increasing concern about the environmental effects of carbon dioxide, particulate matter and nitrous oxide emissions have resulted in a growing demand for motor vehicles that operate either partly or entirely on electrical energy.

Hybrid Electric Vehicles (HEV) make use of both electrical energy stored in re-chargeable batteries and the mechanical energy converted from fuel, usually hydrocarbon based, by a conventional internal combustion engine (ICE). The batteries are charged during driving operation by the ICE and also by recovering kinetic energy during deceleration and braking. This process is offered by a number of vehicle original equipment manufacturers (OEMs) for some of their vehicle models. HEVs typically provide a normal driving experience, with the principle advantage of improved fuel consumption and reduced tailpipe CO₂, particulate matter and nitrous oxide emissions in comparison to conventional ICE only vehicles. Plug-in Hybrid Electric Vehicles (PHEVs) have similar functionality to HEVs, but in this application the battery can also be connected to the mains electrical system for recharging when the vehicle is parked. PHEVs typically have larger battery packs than HEV which affords some all-electric range capability. Dynamic driving will use electric power and ICE, though the area of operation using an internal combustion engine (ICE) for propulsion may be restricted to cruising and intercity driving. Consequently the fuel appetite of vehicles may well be different from that required currently for conventional ICE or HEV equipped vehicles. For vehicles based exclusively in an urban environment, the increased EV mode capacity and plug-in charging function further reduce the level of ICE activity. This can lead to significantly extended residence time for the fuel tank contents compared to HEV and conventional ICE vehicles.

Conventional ICE vehicles deliver about 600 km (400 miles) range for a propulsion system mass of about 200 kg and require a re-fill time of around 2 minutes. In comparison, it is considered that a battery pack based on current LiON technology that could offer comparable range and useful battery life would have a mass of about 1700 kg. The additional mass of the motor, power electronics and vehicle chassis would result in a much heavier vehicle than the conventional ICE equivalent.

In a conventional ICE vehicle, the engine torque and power delivery from the engine must cover the full range of vehicle operating dynamics. However, the thermodynamic efficiency of an internal combustion engine cannot be fully optimised across a wide range of operating conditions. The ICE has a relatively narrow dynamic range. Hence a major challenge for the vehicle manufacturers, generally known as original equipment manufacturers (OEMs), is to develop engine technologies and transmission systems that allow the engine torque and power delivery from the engine to operate over the full range of vehicle operating dynamics. Electrical machines on the other hand can be designed to have a very wide dynamic range, e.g., are able to deliver maximum torque at zero speed. This control flexibility is well recognised as a useful feature in industrial drive applications and offers potential in automotive applications. Within their operating envelope, electrical machines can be controlled using sophisticated electronics to give very smooth torque delivery, tailored to the demand requirements. However it may be possible to provide different torque delivery profiles that are more appealing to drivers. Hence this is likely to be an area of interest going forward for automotive designers. At higher speeds, electrical drive systems tend to be limited by the heat rejection capacity of the power electronics and the cooling system for the electric motor itself. Additional considerations for high torque motors at high speeds are associated with the mass of the rotating components, where very high centrifugal forces can be produced at high speeds. These can be destructive. In HEVs and PHEVs, the electric motor is therefore able to provide only some of the dynamic range. However, this can allow the efficiency of the ICE to be optimised over a narrower range of operation. This offers some advantages in terms of engine design.

Hence, current hydrocarbon fuels developed for a full range ICE may not be optimised or indeed beneficial for HEV or PHEV ICE units. Fuels have been formulated and regulated for conventional ICE vehicles for many years and may therefore be considered to have stabilised, with degrees of freedom in the formulation space well understood. The relatively recent introduction of hybrid technology presents an opportunity to consider the fuel formulation space from an entirely new perspective. In particular, while HEV and PHEV ICE units typically generate less tailpipe CO₂ emissions than ICE only vehicles, it would be desirable to further reduce the CO₂ emissions of HEV and PHEV vehicles. It has surprisingly been found by the present inventor that by selecting a gasoline composition having a final boiling point of less than 190° C can have a significant effect on reducing the CO₂ emissions, in particular in a hybrid electric vehicle such as a PHEV.

US2006/254126 relates to a hydrocarbon fuel composition which is suitable for use in a fuel cell apparatus as well as in an internal combustion engine. Gasoline WO01/463 in Table 2 of US2006/254126 has a final boiling point of 142.8°C and gasoline WO01/463 in Table 2 of US2006/254126 has a final boiling point of 206.2°C.

US2012/151824 relates to fuel compositions exhibiting reduced greenhouse gas emissions. The fuel compositions in US2012/151824 comprise at least one component derived from the pyrolysis of a renewable feedstock comprising biomass. There is no mention in US2012/151824 of the use of the fuel composition in a spark ignition engine of a plug-in hybrid electric vehicle.

US2003/183554 relates to an unleaded formulated gasoline for use in motor vehicles or in aircraft comprising a base blend composition having a MON of at least 80 comprising component (a) at least 5%v of at least one hydrocarbon having formula I, R-CH₂-CH(CH₃)-C(CH₃)₂-CH₃ wherein R is H or methyl, and component (b) at least one saturated liquid aliphatic hydrocarbon having 4 to 12 carbon atoms and at least one gasoline additive. There is no mention in US2003/183554 of the use of the fuel composition in a spark ignition engine of a plug-in hybrid electric vehicle.

US2009/229175 discloses a fuel for HCCI engines. However there is no mention in this document of a spark ignition internal combustion engine comprised within the powertrain of a plug-in hybrid electric vehicle.

WO2016/055461 discloses a liquid fuel composition suitable for use in a spark ignition engine, comprising a mixture of hydrocarbons wherein the composition exhibits a vapour pressure of greater than around 25kPa and below around 50kPa. WO2016/055461 teaches that for hybrid electric vehicles, a fuel composition of low vapour pressure showed improvement in fuel consumption and power. Fuel B in Table 1 of WO2016/055461 has a final boiling point of 192.3°C.

### Summary of the Invention

According to a first aspect of the invention there is provided the use of a liquid fuel composition in a spark ignition internal combustion engine for providing an improvement in CO₂ emissions, wherein the liquid fuel composition has a final boiling point of less than 190° C, and wherein the spark ignition internal combustion engine is comprised within the powertrain of a plug-in hybrid electric vehicle.

It has surprisingly been found that the liquid fuel composition used in the present invention provides improved (i.e., reduced) CO₂ emissions in a spark ignition internal combustion engine, where the spark ignition internal combustion engine is comprised within the powertrain of a plug-in hybrid electric vehicle.

### Drawings

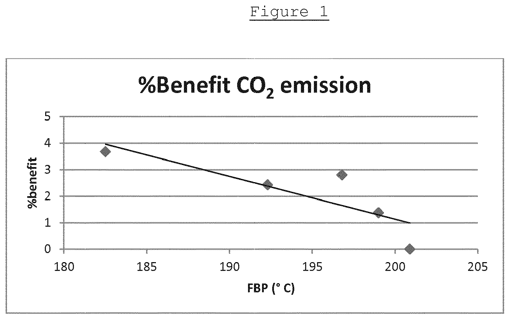

Embodiments of the invention are illustrated by the accompanying drawings in which Figure 1 shows a graph that plots %benefit CO₂ emissions versus FBP (°C) for Fuels A-E described in the Examples.

### Detailed Description of the Invention

In order to assist with the understanding of the invention several terms are defined herein.

The present invention relates to the use of a liquid fuel composition in a spark ignition internal combustion engine for providing an improvement in CO₂ emissions, wherein the liquid fuel composition has a final boiling point of less than 190° C, and wherein the spark ignition internal combustion engine is comprised within the powertrain of a plug-in hybrid electric vehicle.

In the context of the present invention, the term "improving" embraces any degree of improvement in CO₂ emissions. Any improvement in this context refers to a reduction in CO₂ emissions and may for instance be a reduction in CO₂ emissions of 0.05% or more, preferably 0.1% or more, more preferably 0.2% or more, even more preferably 0.5% or more, especially 1% or more, more especially 2% or more, even more especially 5% or more, and in particular 10% or more, compared to the CO₂ emissions of an analogous fuel formulation having a FBP of 190° C or more. The reduction in CO₂ emissions may be at most a 15% reduction in CO₂ emissions compared to an analogous fuel formulation which has a FBP of 190° C or greater.

In accordance with the present invention, the CO₂ emissions provided by a fuel composition may be determined in any known manner, for instance, using the Non-dispersive infrared (NDIR) analyser.

However, it should be appreciated that any measurable improvement in CO₂ emissions may provide a worthwhile advantage, depending on what other factors are considered important, e.g., availability, cost, safety and so on.

The liquid fuel composition used in the present invention preferably comprises a gasoline base fuel suitable for use in an internal combustion engine. Therefore the liquid fuel composition used in the present invention is a gasoline composition.

The term "comprises" as used herein is intended to indicate that as a minimum the recited components are included but that other components that are not specified may also be included as well.

The maximum final boiling point given in the gasoline EN228 specification is 210° C, however, the present inventor surprisingly saw improved CO₂ emissions when the final boiling point (FBP) of the liquid fuel composition is less than 190° C.

The boiling point of a substance is the temperature at which it can change state from a liquid to a gas throughout the bulk of the liquid and is further defined as the temperature at which the saturated vapor pressure of a liquid is equal to the surrounding atmospheric pressure. The "final boiling point" (FBP) of a gasoline composition is the temperature at which almost all (typically 98 %v/v) of the gasoline has evaporated and can be seen on a standard distillation curve of a gasoline composition, for example according to Energy Institute Standard IP 123.

In the liquid fuel compositions used in the present invention, the gasoline used as the gasoline base fuel may be any gasoline suitable for use in an internal combustion engine of the spark-ignition (petrol) type known in the art, including automotive engines as well as in other types of engine such as, for example, off-road and aviation engines, provided that the final boiling point of the liquid fuel composition is less than 190° C. The gasoline used as the base fuel in the liquid fuel composition herein may conveniently also be referred to as 'base gasoline'.

The gasoline base fuel may itself comprise a mixture of two or more different gasoline fuel components, and/or be additivated as described below.

Conventionally gasoline base fuels are present in a gasoline or liquid fuel composition in a major amount, for example greater than 50% v/v of the liquid fuel composition, and may be present in an amount of up to 90% v/v, or 95% v/v, or 99% v/v, or 99.9% v/v, or 99.99% v/v, or 99.999% v/v. Suitable the liquid fuel composition contains or consists essentially of the gasoline base fuel in conjunction with one or more optional gasoline fuel additives, such as specified hereinafter.

Gasolines typically comprise mixtures of hydrocarbons boiling in the range from 25° to 230° C (EN-ISO 3405), the optimal ranges and distillation curves typically varying according to climate and season of the year. In the present invention, the gasolines used preferably comprise mixtures of hydrocarbons boiling in the range from 25° to less than 200° C. The hydrocarbons in a gasoline may be derived by any means known in the art, conveniently the hydrocarbons may be derived in any known manner from straight-run gasoline, synthetically-produced aromatic hydrocarbon mixtures, thermally or catalytically cracked hydrocarbons, hydro-cracked petroleum fractions, catalytically reformed hydrocarbons or mixtures of these.

The specific distillation curve, hydrocarbon composition, research octane number (RON) and motor octane number (MON) of the gasoline are not critical, provided the FBP of the liquid fuel composition is less than 190° C.

Conveniently, the research octane number (RON) of the gasoline base fuel may be at least 80, for instance in the range of from 80 to 110. Typically, the RON of the gasoline base fuel will be at least 90, for instance in the range of from 90 to 110. Typically, the RON of the gasoline base fuel will be at least 91, for instance in the range of from 91 to 105 (EN 25164). The motor octane number (MON) of the gasoline may conveniently be at least 70, for instance in the range of from 70 to 110. Typically, the MON of the gasoline will be at least 75, for instance in the range of from 75 to 105 (EN 25163).

The liquid fuel composition used in the present invention has a RON of 95 or less, preferably of 93 or less, more preferably 92 or less, even more preferably 90 or less. The liquid fuel composition used in the present invention has a MON in the range of from 75 to 90.

Typically, gasolines comprise components selected from one or more of the following groups: saturated hydrocarbons, olefinic hydrocarbons, aromatic hydrocarbons, and oxygenated hydrocarbons. Conveniently, the gasoline may comprise a mixture of saturated hydrocarbons, olefinic hydrocarbons, aromatic hydrocarbons, and, optionally, oxygenated hydrocarbons.

Typically, the olefinic hydrocarbon content of the gasoline is in the range of from 0 to 40% v/v based on the gasoline (ASTM D1319); preferably, the olefinic hydrocarbon content of the gasoline is in the range of from 0 to 30% v/v based on the gasoline, more preferably, the olefinic hydrocarbon content of the gasoline is in the range of from 0 to 20% v/v based on the gasoline.

Typically, the aromatic hydrocarbon content of the gasoline is in the range of from 0 to 70% v/v based on the gasoline (ASTM D1319), for instance the aromatic hydrocarbon content of the gasoline is in the range of from 10% to 60% v/v based on the gasoline; preferably, the aromatic hydrocarbon content of the gasoline is in the range of from 0 to 50% v/v based on the gasoline, for instance the aromatic hydrocarbon content of the gasoline is in the range of from 10% to 50% v/v based on the gasoline.

The benzene content of the gasoline is at most 10% v/v, more preferably at most 5% v/v, especially at most 1% v/v based on the gasoline.

The gasoline preferably has a low or ultra low sulphur content, for instance at most 1000 mg/kg (otherwise known as ppm or ppmm or parts per million by mass), preferably no more than 500 mg/kg, more preferably no more than 100, even more preferably no more than 50 and most preferably no more than even 10 mg/kg.

The gasoline also preferably has a low total lead content, such as at most 0.005 g/l, most preferably being lead free - having no lead compounds added thereto (i.e., unleaded).

When the gasoline comprises oxygenated hydrocarbons, at least a portion of non-oxygenated hydrocarbons will be substituted for oxygenated hydrocarbons. The oxygen content of the gasoline may be up to 35% m/m (EN 1601) (e.g., ethanol *per se*) based on the gasoline. For example, the oxygen content of the gasoline may be up to 25% m/m, preferably up to 10% m/m. Conveniently, the oxygenate concentration will have a minimum concentration selected from any one of 0, 0.2%, 0.4%, 0.6%, 0.8%, 1.0%, and 1.2% m/m, and a maximum concentration selected from any one of 5%, 4.5%, 4.0%, 3.7%, 3.5%, 3.0%, and 2.7% m/m.

Examples of oxygenated hydrocarbons that may be incorporated into the gasoline include alcohols, ethers, esters, ketones, aldehydes, carboxylic acids and their derivatives, and oxygen containing heterocyclic compounds. Preferably, the oxygenated hydrocarbons that may be incorporated into the gasoline are selected from alcohols (such as methanol, ethanol, propanol, 2-propanol, butanol, tert-butanol, iso-butanol and 2-butanol), ethers (preferably ethers containing 5 or more carbon atoms per molecule, e.g., methyl tert-butyl ether and ethyl tert-butyl ether) and esters (preferably esters containing 5 or more carbon atoms per molecule); a particularly preferred oxygenated hydrocarbon is ethanol.

When oxygenated hydrocarbons are present in the gasoline, the amount of oxygenated hydrocarbons in the gasoline may vary over a wide range. For example, gasolines comprising a major proportion of oxygenated hydrocarbons are currently commercially available in countries such as Brazil and U.S.A., e.g., ethanol *per se* and E85, as well as gasolines comprising a minor proportion of oxygenated hydrocarbons, e.g., E10 and E5. Preferably, the gasoline may contain up to 85% v/v oxygenated hydrocarbons. Preferably, the amount of oxygenated hydrocarbons present in the gasoline is selected from one of the following amounts: up to 85% v/v; up to 70% v/v; up to 65% v/v; up to 30% v/v; up to 20% v/v; up to 15% v/v; and, up to 10% v/v, depending upon the desired final formulation of the gasoline. Conveniently, the gasoline may contain at least 0.5%, 1.0% or 2.0% v/v oxygenated hydrocarbons.

Examples of suitable gasolines include gasolines which have an olefinic hydrocarbon content of from 0 to 20% v/v (ASTM D1319), an oxygen content of from 0 to 5% m/m (EN 1601), an aromatic hydrocarbon content of from 0 to 50% v/v (ASTM D1319) and a benzene content of at most 1% v/v.

Also suitable for use herein are gasoline blending components which can be derived from a biological source. Examples of such gasoline blending components can be found in WO2009/077606, WO2010/028206, WO2010/000761, European patent application nos. 09160983.4, 09176879.6, 09180904.6, and US patent application serial no. 61/312307.

Whilst not critical to the present invention, the base gasoline or the gasoline composition used in the present invention may conveniently include one or more optional fuel additives. The concentration and nature of the optional fuel additive(s) that may be included in the base gasoline or the gasoline composition used in the present invention is not critical. Non-limiting examples of suitable types of fuel additives that can be included in the base gasoline or the gasoline composition used in the present invention include anti-oxidants, corrosion inhibitors, detergents, dehazers, antiknock additives, metal deactivators, valve-seat recession protectant compounds, dyes, solvents, carrier fluids, diluents and markers. Examples of suitable such additives are described generally in US Patent No. 5,855,629.

Conveniently, the fuel additives can be blended with one or more solvents to form an additive concentrate, the additive concentrate can then be admixed with the base gasoline or the gasoline composition used in the present invention.

The (active matter) concentration of any optional additives present in the base gasoline or the gasoline composition used in the present invention is preferably up to 1% m/m, more preferably in the range from 5 to 2000 mg/kg, advantageously in the range of from 300 to 1500 mg/kg, such as from 300 to 1000 mg/kg.

As stated above, the gasoline composition may also contain synthetic or mineral carrier oils and/or solvents.

Examples of suitable mineral carrier oils are fractions obtained in crude oil processing, such as brightstock or base oils having viscosities, for example, from the SN 500 - 2000 class; and also aromatic hydrocarbons, paraffinic hydrocarbons and alkoxyalkanols. Also useful as a mineral carrier oil is a fraction which is obtained in the refining of mineral oil and is known as "hydrocrack oil" (vacuum distillate cut having a boiling range of from about 360° to 500° C, obtainable from natural mineral oil which has been catalytically hydrogenated under high pressure and isomerized and also deparaffinized).

Examples of suitable synthetic carrier oils are: polyolefins (poly-alpha-olefins or poly (internal olefin)s), (poly)esters, (poly)alkoxylates, polyethers, aliphatic polyether amines, alkylphenol-started polyethers, alkylphenol-started polyether amines and carboxylic esters of long-chain alkanols.

Examples of suitable polyolefins are olefin polymers, in particular based on polybutene or polyisobutene (hydrogenated or nonhydrogenated).

Examples of suitable polyethers or polyetheramines are preferably compounds comprising polyoxy-C₂-C₄-alkylene moieties which are obtainable by reacting C₂-C₆₀ -alkanols, C₆-C₃₀-alkanediols, mono- or di-C₂-C₃₀-alkylamines, C₁-C₃₀-alkylcyclohexanols or C₁-C₃₀-alkylphenols with from 1 to 30 mol of ethylene oxide and/or propylene oxide and/or butylene oxide per hydroxyl group or amino group, and, in the case of the polyether amines, by subsequent reductive amination with ammonia, monoamines or polyamines. Such products are described in particular in EP-A-310 875, EP-A-356 725, EP-A-700 985 and US-A-4,877,416. For example, the polyether amines used may be poly-C₂-C₆-alkylene oxide amines or functional derivatives thereof. Typical examples thereof are tridecanol butoxylates or isotridecanol butoxylates, isononylphenol butoxylates and also polyisobutenol butoxylates and propoxylates, and also the corresponding reaction products with ammonia.

Examples of carboxylic esters of long-chain alkanols are in particular esters of mono-, di- or tricarboxylic acids with long-chain alkanols or polyols, as described in particular in DE-A-38 38 918. The mono-, di- or tricarboxylic acids used may be aliphatic or aromatic acids; suitable ester alcohols or polyols are in particular long-chain representatives having, for example, from 6 to 24 carbon atoms. Typical representatives of the esters are adipates, phthalates, isophthalates, terephthalates and trimellitates of isooctanol, isononanol, isodecanol and isotridecanol, for example di-(n- or isotridecyl) phthalate.

Further suitable carrier oil systems are described, for example, in DE-A-38 26 608, DE-A-41 42 241, DE-A-43 09 074, EP-A-0 452 328 and EP-A-0 548 617, which are incorporated herein by way of reference.

Examples of particularly suitable synthetic carrier oils are alcohol-started polyethers having from about 5 to 35, for example from about 5 to 30, C₃-C₆-alkylene oxide units, for example selected from propylene oxide, n-butylene oxide and isobutylene oxide units, or mixtures thereof. Non-limiting examples of suitable starter alcohols are long-chain alkanols or phenols substituted by long-chain alkyl in which the long-chain alkyl radical is in particular a straight-chain or branched C₆-C₁₈-alkyl radical. Preferred examples include tridecanol and nonylphenol.

Further suitable synthetic carrier oils are alkoxylated alkylphenols, as described in DE-A-10 102 913.6.

Mixtures of mineral carrier oils, synthetic carrier oils, and mineral and synthetic carrier oils may also be used.

Any solvent and optionally co-solvent suitable for use in fuels may be used. Examples of suitable solvents for use in fuels include: non-polar hydrocarbon solvents such as kerosene, heavy aromatic solvent ("solvent naphtha heavy", "Solvesso 150"), toluene, xylene, paraffins, petroleum, white spirits, those sold by Shell companies under the trademark "SHELLSOL", and the like. Examples of suitable co-solvents include: polar solvents such as esters and, in particular, alcohols (e.g., t-butanol, i-butanol, hexanol, 2-ethylhexanol, 2-propyl heptanol, decanol, isotridecanol, butyl glycols, and alcohol mixtures such as those sold by Shell companies under the trade mark "LINEVOL", especially LINEVOL 79 alcohol which is a mixture of C₇-C₉ primary alcohols, or a C₁₂-C₁₄ alcohol mixture which is commercially available).

Dehazers/demulsifiers suitable for use in liquid fuels are well known in the art. Non-limiting examples include glycol oxyalkylate polyol blends (such as sold under the trade designation TOLAD™ 9312), alkoxylated phenol formaldehyde polymers, phenol/formaldehyde or C₁-C₁₈ alkylphenol/-formaldehyde resin oxyalkylates modified by oxyalkylation with C₁-C₁₈ epoxides and diepoxides (such as sold under the trade designation TOLAD™ 9308), and C₁-C₄ epoxide copolymers cross-linked with diepoxides, diacids, diesters, diols, diacrylates, dimethacrylates or diisocyanates, and blends thereof. The glycol oxyalkylate polyol blends may be polyols oxyalkylated with C₁-C₄ epoxides. The C₁-C₁₈ alkylphenol phenol/- formaldehyde resin oxyalkylates modified by oxyalkylation with C₁-C₁₈ epoxides and diepoxides may be based on, for example, cresol, t-butyl phenol, dodecyl phenol or dinonyl phenol, or a mixture of phenols (such as a mixture of t-butyl phenol and nonyl phenol). The dehazer should be used in an amount sufficient to inhibit the hazing that might otherwise occur when the gasoline without the dehazer contacts water, and this amount will be referred to herein as a "haze-inhibiting amount." Generally, this amount is from about 0.1 to about 20 mg/kg (e.g., from about 0.1 to about 10 mg/kg), more preferably from 1 to 15 mg/kg, still more preferably from 1 to 10 mg/kg, advantageously from 1 to 5 mg/kg based on the weight of the gasoline.

Further customary additives for use in gasolines are corrosion inhibitors, for example based on ammonium salts of organic carboxylic acids, said salts tending to form films, or of heterocyclic aromatics for non-ferrous metal corrosion protection; antioxidants or stabilizers, for example based on amines such as phenyldiamines, e.g., p-phenylenediamine, N,N'-di-sec-butyl-p-phenyldiamine, dicyclohexylamine or derivatives thereof or of phenols such as 2,4-di-tert-butylphenol or 3,5-di-tert-butyl-4-hydroxy-phenylpropionic acid; anti-static agents; metallocenes such as ferrocene; methylcyclo-pentadienylmanganese tricarbonyl; lubricity additives, such as certain fatty acids, alkenylsuccinic esters, bis(hydroxyalkyl) fatty amines, hydroxyacetamides or castor oil; and also dyes (markers). Amines may also be added, if appropriate, for example as described in WO03/076554. Optionally anti-valve seat recession additives may be used such as sodium or potassium salts of polymeric organic acids.

The gasoline compositions herein can also comprise a detergent additive. Suitable detergent additives include those disclosed in WO2009/50287, incorporated herein by reference.

Preferred detergent additives for use in the gasoline composition herein typically have at least one hydrophobic hydrocarbon radical having a number-average molecular weight (Mn) of from 85 to 20 000 and at least one polar moiety selected from:
(A1) mono- or polyamino groups having up to 6 nitrogen atoms, of which at least one nitrogen atom has basic properties;
(A6) polyoxy-C₂- to -C₄-alkylene groups which are terminated by hydroxyl groups, mono- or polyamino groups, in which at least one nitrogen atom has basic properties, or by carbamate groups;
(A8) moieties derived from succinic anhydride and having hydroxyl and/or amino and/or amido and/or imido groups; and/or
(A9) moieties obtained by Mannich reaction of substituted phenols with aldehydes and mono- or polyamines.

The hydrophobic hydrocarbon radical in the above detergent additives, which ensures the adequate solubility in the base fluid, has a number-average molecular weight (Mn) of from 85 to 20 000, especially from 113 to 10 000, in particular from 300 to 5000. Typical hydrophobic hydrocarbon radicals, especially in conjunction with the polar moieties (A1), (A8) and (A9), include polyalkenes (polyolefins), such as the polypropenyl, polybutenyl and polyisobutenyl radicals each having Mn of from 300 to 5000, preferably from 500 to 2500, more preferably from 700 to 2300, and especially from 700 to 1000.

Non-limiting examples of the above groups of detergent additives include the following:
Additives comprising mono- or polyamino groups (A1) are preferably polyalkenemono- or polyalkenepolyamines based on polypropene or conventional (i.e., having predominantly internal double bonds) polybutene or polyisobutene having Mn of from 300 to 5000. When polybutene or polyisobutene having predominantly internal double bonds (usually in the beta and gamma position) are used as starting materials in the preparation of the additives, a possible preparative route is by chlorination and subsequent amination or by oxidation of the double bond with air or ozone to give the carbonyl or carboxyl compound and subsequent amination under reductive (hydrogenating) conditions. The amines used here for the amination may be, for example, ammonia, monoamines or polyamines, such as dimethylaminopropylamine, ethylenediamine, diethylenetriamine, triethylenetetramine or tetraethylenepentamine. Corresponding additives based on polypropene are described in particular in WO-A-94/24231.

Further preferred additives comprising monoamino groups (A1) are the hydrogenation products of the reaction products of polyisobutenes having an average degree of polymerization of from 5 to 100, with nitrogen oxides or mixtures of nitrogen oxides and oxygen, as described in particular in WO-A-97/03946.

Further preferred additives comprising monoamino groups (A1) are the compounds obtainable from polyisobutene epoxides by reaction with amines and subsequent dehydration and reduction of the amino alcohols, as described in particular in DE-A-196 20 262.

Additives comprising polyoxy-C₂-C₄-alkylene moieties (A6) are preferably polyethers or polyetheramines which are obtainable by reaction of C₂- to C₆₀-alkanols, C₆- to C₃₀-alkanediols, mono- or di-C₂-C₃₀-alkylamines, C₁-C₃₀-alkylcyclohexanols or C₁-C₃₀-alkylphenols with from 1 to 30 mol of ethylene oxide and/or propylene oxide and/or butylene oxide per hydroxyl group or amino group and, in the case of the polyether-amines, by subsequent reductive amination with ammonia, monoamines or polyamines. Such products are described in particular in EP-A-310 875, EP-A-356 725, EP-A-700 985 and US-A-4 877 416. In the case of polyethers, such products also have carrier oil properties. Typical examples of these are tridecanol butoxylates, isotridecanol butoxylates, isononylphenol butoxylates and polyisobutenol butoxylates and propoxylates and also the corresponding reaction products with ammonia.

Additives comprising moieties derived from succinic anhydride and having hydroxyl and/or amino and/or amido and/or imido groups (A8) are preferably corresponding derivatives of polyisobutenylsuccinic anhydride which are obtainable by reacting conventional or highly reactive polyisobutene having Mn of from 300 to 5000 with maleic anhydride by a thermal route or via the chlorinated polyisobutene. Of particular interest are derivatives with aliphatic polyamines such as ethylenediamine, diethylenetriamine, triethylenetetramine or tetraethylenepentamine. Such additives are described in particular in US-A-4 849 572.

Additives comprising moieties obtained by Mannich reaction of substituted phenols with aldehydes and mono- or polyamines (A9) are preferably reaction products of polyisobutene-substituted phenols with formaldehyde and mono- or polyamines such as ethylenediamine, diethylenetriamine, triethylenetetramine, tetraethylenepentamine or dimethylaminopropylamine. The polyisobutenyl-substituted phenols may stem from conventional or highly reactive polyisobutene having Mn of from 300 to 5000. Such "polyisobutene-Mannich bases" are described in particular in EP-A-831 141.

Preferably, the detergent additive used in the gasoline compositions herein contains at least one nitrogen-containing detergent, more preferably at least one nitrogen-containing detergent containing a hydrophobic hydrocarbon radical having a number average molecular weight in the range of from 300 to 5000. Preferably, the nitrogen-containing detergent is selected from a group comprising polyalkene monoamines, polyetheramines, polyalkene Mannich amines and polyalkene succinimides. Conveniently, the nitrogen-containing detergent may be a polyalkene monoamine.

In the above, amounts (concentrations, % v/v, mg/kg (ppm), % m/m) of components are of active matter, i.e., exclusive of volatile solvents/diluent materials.

The liquid fuel composition used in the present invention can be produced by admixing a gasoline base fuel suitable for use in an internal combustion engine with one or more fuel additives if present. Since the base fuel is a gasoline, then the liquid fuel composition produced is a gasoline composition.

It has surprisingly been found that the use of a liquid fuel composition having a final boiling point of less than 190° C provides benefits in terms of improved CO₂ emissions, in a spark ignition internal combustion engine, wherein the spark ignition internal combustion engine is comprised within the powertrain of a plug-in hybrid electric vehicle.

The invention is further described by reference to the following non-limiting examples.

### Examples

The present Examples test CO₂ emissions of various gasoline fuel compositions in a PHEV. The Examples use five different gasoline compositions (Fuels A-E). The properties of Fuels A-E are set out in Table 1.

**Table 1 Fuel Properties**

| Property | Unit | Fuel A* | Fuel B* | Fuel C | Fuel D* | Fuel E* |
|---|---|---|---|---|---|---|
| | | | | | | |
| RON | - | 96.5 | 96.1 | 99.3 | 99.7 | 97.7 |
| MON | - | 85.4 | 86.5 | 87.6 | 88.3 | 86.1 |
| Density @ 15°C | g/cm³ | 0.7390 | 0.7523 | 0.7415 | 0.7415 | 0.7426 |
| IBP (IP 123) | ° C | 26.0 | 39.9 | 30.5 | 25.2 | 24.9 |
| FBP (IP 123) | ° C | 200.9 | 192.3 | 182.5 | 196.8 | 199.0 |
| E70 | % v/v | 33.5 | 11.8 | 29.1 | 42.5 | 41.0 |
| E100 | % v/v | 52.9 | 45.6 | 48.2 | 65.3 | 55.1 |
| E150 | % v/v | 84.9 | 88.6 | 92.4 | 89.3 | 86.9 |
| VP | kPa | 94.9 | 38.3 | 68.8 | 83.7 | 97.3 |
| GC | | | | | | |
| C | - | 6.48 | 7.03 | 6.59 | 6.16 | 6.02 |
| H | - | 11.64 | 12.66 | 11.77 | 11.75 | 11.15 |
| O | - | 0.00 | 0.00 | 0.00 | 0.21 | 0.10 |
| C | % m/m | 87.00 | 86.95 | 87.04 | 83.03 | 85.00 |
| H | % m/m | 13.02 | 12.66 | 12.96 | 13.20 | 13.12 |
| O | % m/m | 0.00 | 0.00 | 0.00 | 3.77 | 1.88 |
| Paraffins | % v/v | 12.28 | 7.73 | 9.71 | 9.56 | 11.31 |
| Isoparaffi ns | % v/v | 33.52 | 44.3 | 38.01 | 26.61 | 32.55 |
| Olefins (incl. dienes) | % v/v | 15.21 | 7.87 | 14.16 | 12.16 | 14.49 |
| Dienes | % v/v | 0.13 | 0.02 | 0.27 | 0.10 | 0.12 |
| Naphthenes | % v/v | 3.07 | 4.16 | 1.96 | 2.89 | 3.44 |
| Aromatics | % v/v | 34.62 | 34.91 | 35.95 | 26.83 | 31.55 |
| Oxygenates | % v/v | 0.00 | 0.00 | 0.00 | 20.60 | 5.08 |
| Unknowns | % v/v | 1.30 | 1.03 | 0.22 | 1.35 | 1.58 |
| Total | % v/v | 100.0 | 100.0 | 100.01 | 100.0 | 100.0 |
| AFR (stoich) | - | 14.46 | 14.46 | 14.450 | 13.91 | 14.18 |
| Gr. Ent. Com (g) | MJ/kg | -43.30 | -42.89 | -43.3 | - 41.692 | - 43.076 |
| Vol. Ent. Com. (g) | MJ/L | - 31.998 7 | - 32.266 1 | - 32.107 | - 30.914 6 | - 31.988 2 |
| Gr. Ent. Com. (1) | MJ/kg | - 43.000 | - 43.258 | - 42.927 | - 41.349 | - 42.115 |
| Vol. Ent. Com. (1) | MJ/L | - 31.777 | - 32.543 | - 31.830 4 | - 30.660 3 | - 31.274 6 |
| Heat of vaporisati on | MJ/kg | 0.371 | 0.37 | 0.373 | 0.34 | 0.96 |
| Cal. H/C ratio | - | 1.796 | 1.8 | 1.786 | 1.91 | 1.85 |
| Cal. O/C ratio | - | 0.000 | 0.000 | 0.000 | 0.034 | 0.017 |
| CWF | - | 0.8690 | 0.8687 | 0.870 | 0.8295 | 0.8492 |

| | | | | | | |
|---|---|---|---|---|---|---|
| * Not according to the present invention | | | | | | |

The reference (comparative) fuel (Fuel A) was a standard unleaded gasoline with an octane quality of RON 96.5 that met the current EN228 specification and was similar to a conventional main grade gasoline fuel. The FBP of Fuel A was 200.9° C.

Fuel B represented a stored PHEV fuel. The FBP of Fuel B was 192.3° C.

Fuel C was an oxygen-free high octane quality EN228 compliant fuel with a RON of 99.3. The FBP of Fuel C was 182.5° C.

Fuel D was a blend of reference Fuel E with 20% v/v MTBE. It had a high octane quality of RON 99.7, but the oxygen content was above the EN228 maximum. The FBP of Fuel D was 196.8° C.

Fuel E was a currently available fuel containing 5% v/v ethanol that met the EN228 specification. It had a high octane quality of RON 97.7, a high VP, but due to the oxygen in ethanol, a relatively low energy density (although the oxygen content is below the maximum specified in EN228). The FBP of Fuel E was 199.0° C.

### Vehicle

A 2008 Toyota Prius 1.5 T4 HEV that was converted by Amberjac © to have plug-in charging capability was selected for test as a representative PHEV. The ICEs in the Prius operated using a four-stroke cycle with variable valve timing.

### Measuring CO₂ Emissions and Fuel Consumption over NEDC

The Prius was used for the CO₂ emissions and fuel consumption test which was conducted on a four-wheel drive chassis dynamometer at a test temperature of 5°C. A standard NEDC (New European Driving Cycle) was used for the emissions measurements. Fuel consumption was calculated using the carbon balance method, which is based on the simple principle of carbon mass continuity through the engine and exhaust system. Hence totalling the measured carbon content of the exhaust gases (CO, CO₂ and total unburned hydrocarbon) and comparing this with the carbon present in the fuel used at the time leading to an accurate determination of fuel consumption. Modern vehicles are equipped with exhaust after-treatment systems that are designed to convert hydrocarbon material in the exhaust into additional water and CO₂. Fuel consumption is therefore generally regarded as being strongly correlated with CO₂ emissions.

The following table (Table 3) outlines the results for %CO₂ benefit for Fuels A-E in the Prius.

**Table 3**

| Fuel | FBP(° C) | %CO₂ emission benefit in Prius |
|---|---|---|
| A* | 200.9 | 0 |
| B | 192.3 | 2.42 |
| C | 182.5 | 3.68 |
| D | 196.8 | 2.80 |
| E | 199.0 | 1.37 |

| | | |
|---|---|---|
| *Comparative Example | | |

The results shown in Table 3 are plotted on a graph shown in Figure 1.

It can been seen from the Results in Table 3 and in Figure 1 that the lower the final boiling point of the fuel, the better the fuel consumption/CO₂ emissions benefit in the Prius. This may be bcause the energy from more volatile fuels can be used more effectively.

### Discussion

Surprisingly, it was found that the fuels having the lower FBPs provided the most improved CO₂ emissions.

Although particular embodiments of the invention have been disclosed herein in detail, this has been done by way of example and for the purposes of illustration only. The aforementioned embodiments are not intended to be limiting with respect to the scope of the appended claims.

## Claims

1. Use of a liquid fuel composition in a spark ignition internal combustion engine for providing an improvement in CO₂ emissions, wherein the liquid fuel composition has a final boiling point of less than 190° C, and wherein the spark ignition internal combustion engine is comprised within the powertrain of a plug-in hybrid electric vehicle.

2. Use according to Claim 1 wherein the liquid fuel composition comprises a gasoline base fuel.

3. Use according to Claim 1 or 2 wherein the liquid fuel composition is a gasoline.

## Patentansprüche

1. Verwendung einer Flüssigbrennstoffzusammensetzung in einem Verbrennungsmotor mit Fremdzündung zum Bereitstellen einer Verbesserung der CO₂-Emissionen, wobei die Flüssigbrennstoffzusammensetzung einen Endsiedepunkt von weniger als 190 °C aufweist und wobei der Verbrennungsmotor mit Fremdzündung innerhalb des Antriebsstrangs eines Steckdosenhybridelektrofahrzeugs enthalten ist.

2. Verwendung nach Anspruch 1, wobei die Flüssigbrennstoffzusammensetzung einen Benzinbasisbrennstoff umfasst.

3. Verwendung nach Anspruch 1 oder 2, wobei die Flüssigbrennstoffzusammensetzung ein Benzin ist.

## Revendications

1. Utilisation d'une composition de carburant liquide dans un moteur à combustion interne à allumage commandé pour fournir une amélioration en émissions de CO₂, dans laquelle la composition de carburant liquide a un point d'ébullition final inférieur à 190 °C, et dans laquelle le moteur à combustion interne à allumage commandé est compris à l'intérieur du groupe motopropulseur d'un véhicule électrique hybride rechargeable.

2. Utilisation selon la revendication 1, dans laquelle la composition de carburant liquide comprend un carburant à base d'essence.

3. Utilisation selon la revendication 1 ou 2, dans laquelle la composition de carburant liquide est une essence.
